Europäisches Patentamt

European Patent Office

Office européen des brevets

(11) Veröffentlichungsnummer: **0 103 102 B1**

(12) **EUROPÄISCHE PATENTSCHRIFT**

(45) Veröffentlichungstag der Patentschrift:
03.05.89

(51) Int. Cl.⁴: **B 41 F 13/08**

(21) Anmeldenummer: **83106857.2**

(22) Anmeldetag: **13.07.83**

(54) Druckwerkzylinder mit einer Vorrichtung zur Reduzierung der durch die Kanalüberrollung angeregten Biegeschwingungen.

(30) Priorität: **13.08.82 DE 3230120**

(43) Veröffentlichungstag der Anmeldung:
**21.03.84 Patentblatt 84/12**

(45) Bekanntmachung des Hinweises auf die Patenterteilung:
**03.05.89 Patentblatt 89/18**

(84) Benannte Vertragsstaaten:
**CH DE FR GB IT LI SE**

(56) Entgegenhaltungen:
**DE-A- 3 012 060
GB-A- 2 073 368
US-A- 3 521 340
US-A- 4 125 073**

(73) Patentinhaber: **M.A.N.-ROLAND Druckmaschinen Aktiengesellschaft, Christian-Pless-Strasse 6-30, D-6050 Offenbach/Main (DE)**

(72) Erfinder: **Maurer, Lutz, Schlossstrasse 8 1/2, D-8904 Friedberg (DE)**
Erfinder: **Stöckl, Herbert, Erlkönigweg 35, D-8900 Augsburg 22 (DE)**
Erfinder: **Köbler, Ingo, Zeisigweg 7, D-8901 Anhausen (DE)**
Erfinder: **Engl, Albert, Haus Nr. 12, D-8151 Reitham (DE)**

## Beschreibung

Die Erfindung betrifft einen Druckwerkzylinder mit einer Vorrichtung zur Reduzierung der durch die Kanalüberrollung angeregten Biegeschwingungen mit mindestens einer in dem Druckwerkzylinder angeordneten Zusatzmasse, die durch den nach Überrollen der Zylinderkanäle auftretenden Stoß in Bewegung versetzbar ist.

Aus der US-Patentschrift 4 125 073 ist es bekannt, die nach Überrollen der Zylindergruben zweier benachbarter Druckwerkzylinder auftretenden Stöße zu dämpfen, so daß die durch diese hervorgerufenen Biegeschwingungen der Druckwerkzylinder in ihrer Amplitude verringert werden und somit schneller abklingen. Bei dieser bekannten Dämpfungseinrichtung wird eine in dem Zylinder exzentrisch in einem Schlitz gelagerte Kugel, die in Folge ihrer Zentrifugalkraft beim Überrollen der Zylinderkanäle über einen Käfig an dem Mantel des Zylinders anliegt, durch den bei Auftreffen der Zylinder nach Überrollen der Kanäle auftretenden Stoß in Richtung Achsmittellinie beschleunigt. Im weiteren Verlauf der Zylinderrotation bringt die Zentrifugalkraft die Kugel wieder in Anlage mit dem Zylindermantel, und zwar bevor der nächste Überrollvorgang stattfindet. Bei dieser bekannten Einrichtung ist es von Nachteil, daß durch die Bewegung der Kugel eine erhebliche Unruhe in dem Zylinder auftritt.

Des weiteren ist aus der DE-OS 3 012 060 bekannt, durch eine kreuzförmige Querverstrebung einen Druckwerkzylinder so auszubilden, daß beim Kanaldurchlauf der Zylinderanstellkraft ein maximales Widerstandsmoment entgegengesetzt wird. Die Hohlräume im Zylinder sind mit schwingungsdämpfendem Material ausgefüllt. Derartige Materialien vermögen nur begrenzt entstandene Schwingungsamplituden zu dämpfen.

Aufgabe der Erfindung ist es, einen Druckwerkzylinder der eingangs bezeichneten Gattung zu schaffen, bei dem eine wirkungsvolle Reduzierung der Biegeschwingungsamplituden möglich ist, ohne daß die Dämpfungsmittel eine unerwünschte Unruhe in dem Druckwerkzylinder verursachen, wobei zusätzlich auch Torsionsschwingungen gedämpft werden sollen.

Die Aufgabe wird durch die Anwendung der Merkmale im Kennzeichen des Patentanspruches 1 gelöst.

Die Erfindung wird im folgenden anhand eines Ausführungsbeispieles unter Bezugnahme auf die beiliegenden Zeichnungen beschrieben. In diesen zeigen:

Figur 1: In schematischer Darstellung zwei in Seitenwänden gelagerte Druckwerkzylinder;

Figur 2: eine schematisierte Ansicht der in Figur 1 gezeigten Druckwerkzylinder im Querschnitt;

Figur 3 den Biegeschwingungsverlauf eines rotierenden Druckwerkzylinders;

Figur 4: ein mit dem erfindungsgemäßen Schwingungsdämpfer ausgestatteter Druckwerkszylinder im Längsschnitt.

Figur 5: eine Weiterbildung der in Figur 4 verwendeten Schwingungsdämpfer.

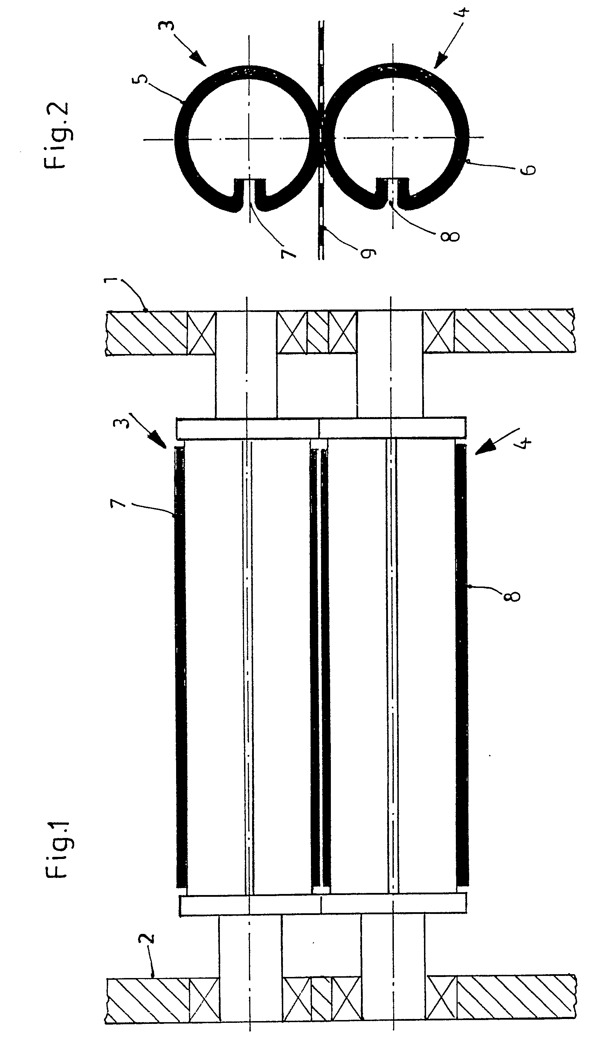

Figur 1 und 2 zeigen eine Druckwerkzylinderanordnung, wie sie üblicherweise in Offsetrotationsdruckmaschinen verwendet wird. Zwischen zwei Seitenwänden 1 und 2 der Maschine sind in nicht näher bezeichneten Lagern zwei Gummituchzylinder 3, 4 angeordnet, die jeweils an ihren Enden mit Schmitzringen ausgestattet sein können. Der Gummituchzylinder 3 ist mit einem Gummituch 5 bespannt. Jeder der Gummituchzylinder 3, 4 weist einen in Achsrichtung verlaufenden Kanal 7, 8 auf. Wie in Figur 2 angedeutet, kann mit einer derartigen Zylinderanordnung ein Druckträger 9 bspw. eine Papierbahn, beidseitig bedruckt werden.

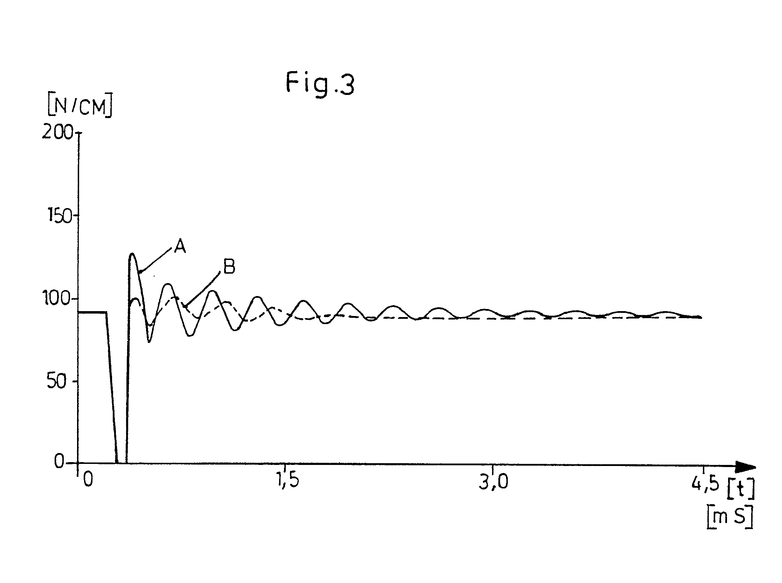

Beim Überrollen der Zylinderkanäle der aneinander angepreßten Gummituchzylinder 3, 4 wird zunächst die Kraft entlang der Drucklinie abgebaut und kann, wie aus Figur 3 ersichtlich, den Wert 0 annehmen. Figur 3 läßt weiterhin erkennen, daß nach Überrollen der Zylinderkanäle 7, 8 beim Wiederauftreffen der Kanalkanten ein erheblicher Stoß auftritt, der zu Unruhen im Druckbild (Streifenbildung) und zu einem frühzeitigen Verschleiß der Schmitzringe führen kann. Die Kurve A in Figur 3 zeigt, daß die durch diesen Stoß hervorgerufenen Schwingungen nur langsam im weiteren Verlauf der Zylinderrotation abklingen.

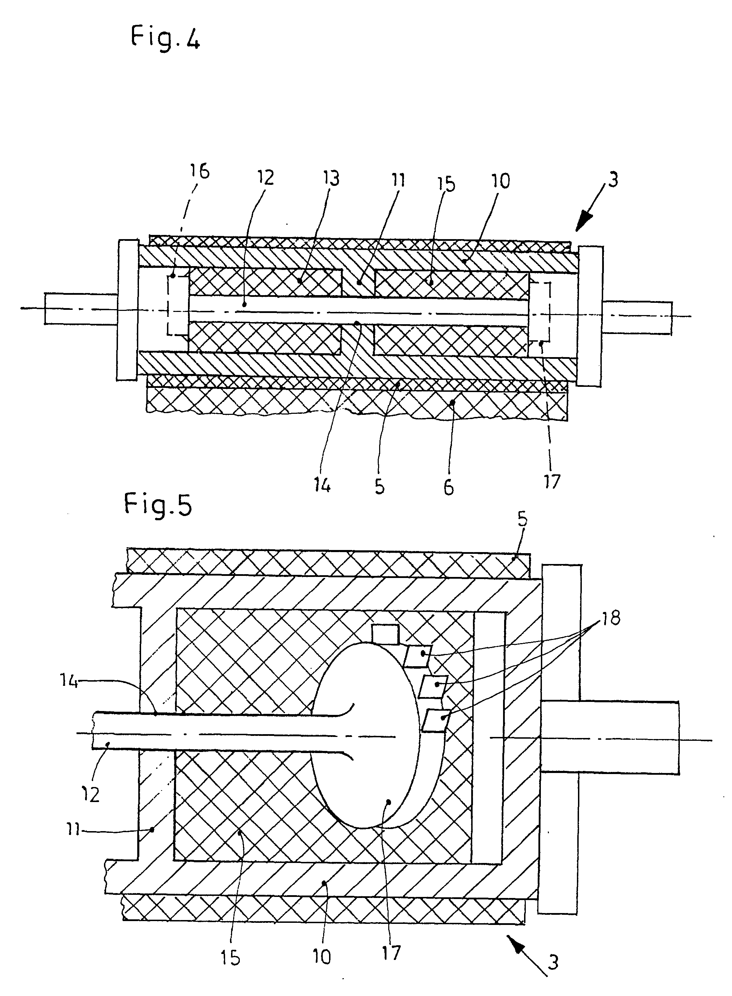

Figur 4 zeigt im Längsschnitt einen Druckwerkzylinder 3, der mit Schwingungsabsorbern ausgerüstet ist. Am Mantel 10 des Druckwerkzylinders 3 ist, in Achsrichtung gesehen, etwa in der Mitte ein den Zylinder vorzugsweise durchsetzender Steg 11 angeordnet. Dieser Steg 11 kann aus einem metallischen Material, bspw. Stahl, bestehen und an der Innenseite des Mantels 10 angeschweißt sein. Ein Absorberstab 12, bspw. ebenfalls aus Stahl, ist in eine Bohrung 13 des Steges symmetrisch eingesetzt, d.h. fest eingepaßt.

Der elastische Absorberstab 12 ist in einer Dämpfungsmasse 13 bzw. 15 eingebettet, die den Mantel 10 füllt. Zur Vermeidung einer nicht erwünschten Unwucht kann das Achsmittel des Absorberstabes 12 mit dem Wellenmittel des Druckwerkzylinders 3 zusammenfallen. Der Dämpfungsbeiwert der Dämpfungsmasse 13, 15 kann

bei $d_m > 5 \times 10^4 [\frac{N_s}{m}]$ liegen.

Falls sich der im Druckwerkzylinder 3 vorgesehene Kanal 7 über die gesamte Länge des Druckwerkzylinders 3 erstreckt, ist es vorteilhaft, den Steg 11 in der Mitte des Druckwerkzylinders 3 anzuordnen, da an dieser Stelle die durch den Stoß hervorgerufene Biegung des Druckwerkzylinders 3 am größten ist.

An den freien Enden des Absorberstabes 12 kann jeweils eine Zusatzmasse 16 bzw. 17 befestigt werden. Diese Zusatzmassen 16, 17 sind ebenfalls in der Dämpfungsmasse 13 bzw. 15 einzubetten.

Nach dem Überrollen der Zylinderkanäle 7, 8 tritt, wie bereits erwähnt, beim Wiederauftreffen der Kanalkanten ein erheblicher Stoß auf, wie in Figur 3 durch Kurve A gezeigt ist. Durch die Verwendung des Schwingungsabsorbers 12 wird dieser Stoß wesentlich reduziert, wie die Kurve B in Figur 3 zeigt. Diese gedämpften Schwingungen klingen auch schneller ab als die in der Kurve A gezeigten ungedämpften Schwingungen. Der Absorberstab ist hinsichtlich seiner Länge und seines Profils so festgelegt, daß die Eigenschwingung dieses durch Massen und Absorberstäbe gebildeten Schwingungssystems, angeregt durch den Kanalstoß, eine vorgegebene Frequenz, vorzugsweise die Biegeeigenfrequenz des Druckwerkzylinders, aufweist. Die Schwingungsenergie des Absorberstabes 12 wird durch die sie jeweils umgebende Dämpfungsmasse 13 bzw. 15 dissipiert.

Das gleiche gilt, wenn beim Durchlaufen der Kanal 7, 8 die Zylinder 3, 4 entlastet werden und deren Schwingungen den Absorberstab 12 anregen.

Um auftretende Torsionsschwingungen zu unterdrücken, ist es von Vorteil die freien Enden des Absorptionsstabes 12, die über den Steg 11 zu Schwingungen angeregt werden, oder die an ihnen befestigten Zusatzmassen 16, 17 mit Schaufeln zu versehen. Figur 5 zeigt die rechte Hälfte des in Figur 4 dargestellten Druckwerkzylinders 3. Hier ist der Absorberstab 12 am freien Ende mit einer Zusatzmasse 17 versehen, die propellerartig am Umfang mit Schaufeln 18 ausgestattet ist. Sowohl die Zusatzmasse 17, als auch die Schaufeln 18 sind in der Dämpfungsmasse 15 eingebettet. Auftretende Torsionsschwingungen werden somit wirkungsvoll gedämpft.

Falls mit dem in Figur 4 gezeigten Absorberstab 12 noch keine ausreichende Dämpfung der Torsionsschwingungen möglich ist, so können mehrere Absorberstäbe an dem Steg 11 befestigt werden. Die in Figur 4 gezeigte Vorrichtung zur Schwingungsdämpfung befindet sich in dem oberen Gummituchzylinder 3. Diese Vorrichtung kann jedoch auch in den unteren Gummituchzylinder 4, sowie in die mit diesen zusammenarbeitenden Plattenzylinder (nicht gezeigt) eingebaut werden. Bedarfsweise können in einem Zylinder auch mehrere Absorberstäbe verwendet werden.

Bezugszeichenliste:
1 Seitenwand
2 Seitenwand
3 Gummizylinder
4 Gummizylinder
5 Gummituch
6 Gummituch
7 Zylindergrube
8 Zylindergrube
9 Druckträger
10 Zylindermantel
11 Steg
12 Absorberstab
13 Dämpfungsmasse
14 Absorberstab
15 Dämpfungsmasse
16 Zusatzmasse
17 Zusatzmasse
18 Schaufeln

**Patentansprüche**

1. Druckwerkzylinder mit einer Vorrichtung zur Reduzierung der durch die Kanalüberrollung angeregten Biegeschwingungen mit mindestens einer in dem Druckwerkzylinder angeordneten Zusatzmasse, die durch den nach Überrollen der Zylinderkanäle auftretenden Stoß in Bewegung versetzbar ist, dadurch gekennzeichnet, daß an der Innenseite des Mantels (10) des Druckwerkzylinders (3) ein Schwingungen übertragender Steg (11) befestigt ist, der mit einem parallel zum Zylinderkanal (7) liegenden Absorberstab (12) verbunden ist, der in einer im Inneren des Zylindermantels (10) befindlichen Dämpfungsmasse (13, 15) eingebettet ist, und daß an den freien Enden des Absorberstabes (12) in den Dämpfungsmassen (13, 15) eingebettete Schaufeln (18) in Art eines Propellers angeordnet sind.

2. Druckwerkzylinder nach Anspruch 1, dadurch gekennzeichnet, daß der den Druckwerkzylinder (3) diametral durchsetzende Steg (11), in Achsrichtung des Druckwerkzylinders (3) gesehen, in der Mitte angeordnet ist.

3. Druckwerkzylinder nach Anspruch 1 oder 2, dadurch gekennzeichnet, daß der Absorberstab (12) an dem Steg (11) symmetrisch befestigt ist.

4. Druckwerkzylinder nach einem der vorangehenden Ansprüche, dadurch gekennzeichnet, daß an den freien Enden des Absorberstabes (12) Zusatzmassen (16, 17) befestigt sind, deren Masseschwerpunkte auf der Mittellinie des Druckwerkzylinders (3) liegen und die ebenfalls in den Dämpfungsmassen (13, 15) eingebettet sind.

5. Druckwerkzylinder nach einem der vorangehenden Ansprüche, dadurch gekennzeichnet, daß die Dämpfungsmasse (13, 15) einen Dämpfungsbeiwert $d_m > 5 \cdot 10^4$ [Ns/m] aufweist und als Absorberstäbe (12) Metallstäbe verwendet werden.

**Claims**

1. A printing cylinder with a device for reducing the bending vibrations caused by rolling over the groove, having at least one additional mass arranged in the printing cylinder which can be set in motion by the impact caused by rolling over the cylinder grooves, characterised in that attached to the inner side of the casing (10) of the printing cylinder (3) is a web (11) which transmits vibrations and which is connected to an absorber rod (12) lying parallel to the cylinder groove (7) and embedded in a damping mass (13, 15) located in the interior of the cylinder casing (10), and that at the free ends of the absorber rod (12) blades (18) embedded in the damping masses (13, 15) are arranged like a propeller.

2. A printing cylinder according to claim 1, characterised in that the web (11), extending diametrally through the printing cylinder (13), viewed on the axial direction of the printing cylinder (3), is arranged in the middle.

3. A printing cylinder according to claim 1 or claim 2, characterised in that the absorber rod (12) is connected to the web (11) symmetrically.

4. A printing cylinder according to any one of the preceding claims, characterised in that connected at the free ends of the absorber rod (12) are additional masses (16, 17) whose centres of gravity lie on the centre line of the printing cylinder (3) and which are likewise embedded in the damping masses (13, 15).

5. A printing cylinder according to any one of the preceding claims, characterised in that the damping mass (13, 15) has a damping coefficient $d_m > 5 \cdot 10^4$ [Ns/m] and metal rods are used as absorber rods (12).

**Revendications**

1. Cylindre de groupe imprimant équipé d'un dispositif destiné à réduire les vibrations de flexion excitées par le franchissement de la rainure, comprenant au moins une masse additionnelle agencée dans le cylindre de groupe imprimant et qui peut être mise en mouvement par le choc qui se produit après le franchissement des rainures des cylindres, caractérisé en ce qu'à la face intérieure de la paroi latérale (10) du cylindre de groupe imprimant (3) est fixé un voile (11) qui transmet les vibrations et qui est assemblé à une barre absorbeur (12) disposée parallèlement à la rainure (5) du cylindre, barre qui est noyée dans une masse amortisseuse (13, 15) contenue dans le volume intérieur de la paroi latérale (10) du cylindre et en ce que des ailettes (18) noyées dans les masses amortisseuses (13, 15) sont montées aux extrémités libres de la barre absorbeur (12) à la façon d'une hélice.

2. Cylindre de groupe imprimant selon la revendication 1, caractérisé en ce que le voile (11) qui traverse diamétralement le cylindre de groupe imprimant (3) est disposé au milieu, considéré dans la direction axiale du cylindre de groupe imprimant (3).

3. Cylindre de groupe imprimant selon la revendication 1 ou 2, caractérisé en ce que la barre absorbeur (12) est fixée au voile (11) dans une disposition symétrique.

4. Cylindre de groupe imprimant selon une des revendications précédentes, caractérisé en ce qu'aux extrémités libres des barres absorbeurs (12), sont fixées des masses additionnelles (16, 17) dont les centres de gravité se trouvent sur l'axe du cylindre de groupe imprimant (3) et qui sont elles aussi noyées dans les masses amortisseuses (13, 15).

5. Cylindre de groupe imprimant selon une des revendications précédentes, caractérisé en ce que les masses amortisseuses (13, 15) possèdent un coefficient d'amortissement $d_m > 5 \cdot 10^4$ [Ns/m] et en ce que, comme barres absorbeurs (12) on utilise des barres métalliques.

Fig.1

Fig.2

EP 0 103 102 B1

## Fig.3

Fig.4

Fig.5